(19) Europäisches Patentamt / European Patent Office / Office européen des brevets

(11) **EP 3 970 904 B1**

(12) **EUROPEAN PATENT SPECIFICATION**

(45) Date of publication and mention
of the grant of the patent:
**21.06.2023 Bulletin 2023/25**

(21) Application number: **20805186.2**

(22) Date of filing: **13.05.2020**

(51) International Patent Classification (IPC):
*B23K 26/364* *(2014.01)*  *B23K 26/064* *(2014.01)*
*B23K 26/082* *(2014.01)*  *G02B 26/12* *(2006.01)*
*B23K 26/06* *(2014.01)*  *B23K 26/40* *(2014.01)*
*B23K 101/18* *(2006.01)*  *B23K 103/04* *(2006.01)*

(52) Cooperative Patent Classification (CPC):
**B23K 26/0648; B23K 26/0652; B23K 26/0821;
B23K 26/364; B23K 26/40; G02B 26/12;
G02B 26/125;** B23K 2101/18; B23K 2103/04

(86) International application number:
**PCT/JP2020/019132**

(87) International publication number:
**WO 2020/230821 (19.11.2020 Gazette 2020/47)**

(54) **GROOVE PROCESSING DEVICE AND GROOVE PROCESSING METHOD**

RILLENBEARBEITUNGSVORRICHTUNG UND RILLENBEARBEITUNGSVERFAHREN

DISPOSITIF ET PROCÉDÉ D'USINAGE DE RAINURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2019 JP 2019091044**

(43) Date of publication of application:
**23.03.2022 Bulletin 2022/12**

(73) Proprietor: **Nippon Steel Corporation
Tokyo 100-8071 (JP)**

(72) Inventor: **HAMAMURA Hideyuki
Tokyo 100-8071 (JP)**

(74) Representative: **Vossius & Partner
Patentanwälte Rechtsanwälte mbB
Siebertstraße 3
81675 München (DE)**

(56) References cited:
DE-A1-102016 107 593    JP-A- H07 178 581
JP-A- H07 178 581    JP-A- 2002 028 798
JP-A- 2002 086 288    JP-A- 2002 292 484
JP-A- 2014 161 899    JP-A- 2014 161 899

# Description

[Technical Field of the Invention]

The present invention relates to a groove processing device and a groove processing method that form a groove in an object using a laser. The present application claims priority based on Japanese Patent Application No. 2019-091044 filed on May 14, 2019.

[Related Art]

In the related art, a groove processing device is known which irradiate a surface of a steel sheet with a laser beam in a direction (scanning direction) intersecting a sheet travelling direction of the steel sheet, using a polygon mirror, to periodically form a groove in the surface of the steel sheet, thereby improving iron loss characteristics (see, for example, Patent Document 1).

DE 10 2016 107593 A1 relates to a laser processing apparatus that performs laser processing on a workpiece such as a semiconductor wafer or the like held on a chuck table and discloses the preamble of the independent claims.

[Prior Art Document]

[Patent Document]

[Patent Document 1] Japanese Unexamined Patent Application, First Publication No. 2002-292484

[Disclosure of the Invention]

[Problems to be Solved by the Invention]

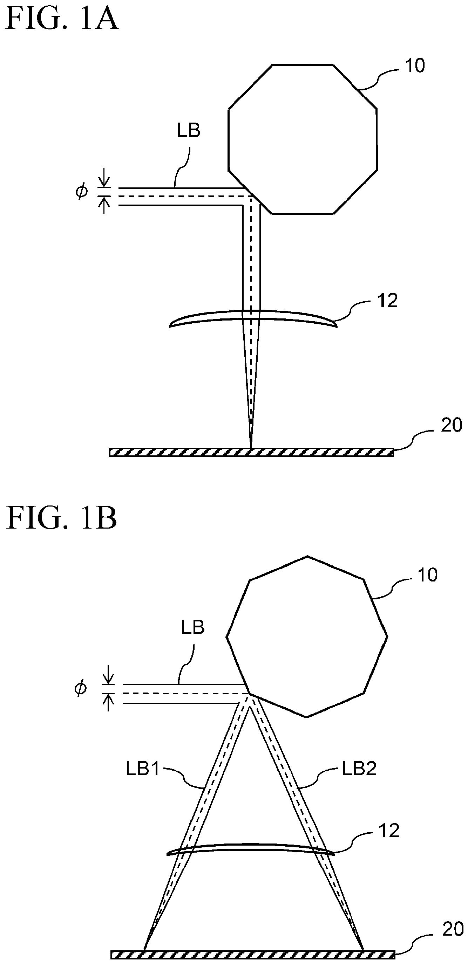

As shown in FIGS. 1A and 1B, a laser beam LB incident on a polygon mirror 10 of the groove processing device is not a point light source and has a predetermined radius $\varphi$.

As shown in FIG. 1A, when the laser beam LB is incident so as to fall within one surface of the polygon mirror 10, the laser beam LB reflected from the polygon mirror 10 is focused on one spot on the surface of the steel sheet 20 through a condensing lens 12, and a groove is formed at the spot on the surface of the steel sheet 20.

On the other hand, as shown in FIG. 1B, when the laser beam LB is incident on a corner portion in which two adjacent surfaces of the polygon mirror 10 meet, the laser beam LB is reflected from each of the two adjacent surfaces and is divided into two laser beams LB 1 and LB2. The divided laser beams LB 1 and LB2 are focused on the surface of the steel sheet 20 through the condensing lens 12. As a result, an end portion of the groove in the scanning direction is processed by the laser beams LB1 and LB2 with insufficient energy densities. Therefore, the end portion of the groove is shallow, and it is difficult to form a uniform groove. In addition, the divided laser beams LB 1 and LB2 are irradiated in a direction different from that of the laser beam LB. Therefore, there is a concern that a position different from the position where a groove is to be formed on the surface of the steel sheet 20 or devices and the like other than the surface of the steel sheet 20 will be erroneously processed.

In order to avoid this situation, a configuration is considered in which a shielding plate, such as a mask, is provided such that a portion corresponding to the end portion of the groove is not irradiated with the laser beams LB 1 and LB2. However, this configuration has a problem that the shielding plate is processed, which causes the contamination of optical components.

The invention has been made in view of the above-mentioned problems, and an object of the invention is to provide a groove processing device and a groove processing method that achieve uniform groove processing and groove depth without contaminating optical components.

[Means for Solving the Problem]

Means for solving the problems include the following aspects.

The invention is defined in the appended claims.

[Effects of the Invention]

According to the invention, the laser beam reflected from the corner portion of the polygon mirror passes through the non-condensing portion of the optical system. Therefore, a groove is not processed in the surface of the object. As a result, it is possible to provide a groove processing device and a groove processing method that achieve uniform groove processing and groove depth without contaminating optical components.

[Brief Description of the Drawings]

FIG. 1A is a schematic diagram showing a state in which a laser beam reflected from a polygon mirror is focused on a surface of a steel sheet when the laser beam is incident so as to fall within one surface of the polygon mirror.

FIG 1B is a schematic diagram showing a state in which the laser beam reflected from each of two adjacent surfaces is focused on the surface of the steel sheet when the laser beam is incident across the two adjacent surfaces of the polygon mirror.

FIG. 2 is a schematic diagram showing a configuration of a groove processing device according to an embodiment of the invention as viewed from a rolling direction of the steel sheet.

FIG. 3 is a schematic diagram showing a rotation angle of the polygon mirror.

FIG. 4 is a schematic diagram showing the size of a lens.

FIG. 5A is a schematic diagram showing the rotation angle of the polygon mirror and an irradiation state of the laser beam.

FIG. 5B is a schematic diagram showing the rotation angle of the polygon mirror and the irradiation state of the laser beam.

FIG. 5C is a schematic diagram showing the rotation angle of the polygon mirror and the irradiation state of the laser beam.

FIG. 5D is a schematic diagram showing the rotation angle of the polygon mirror and the irradiation state of the laser beam.

FIG. 5E is a schematic diagram showing the rotation angle of the polygon mirror and the irradiation state of the laser beam.

FIG. 6 is a schematic diagram showing an aspect in which a spot of the laser beam on the surface of the steel sheet changes depending on the rotation angle of the polygon mirror.

FIG. 7 is a schematic diagram showing a configuration of a groove processing device according to Modification Example 1 of this embodiment as viewed from the rolling direction of the steel sheet.

FIG. 8 is a schematic diagram showing a configuration of a groove processing device according to Modification Example 2 of this embodiment as viewed from the rolling direction of the steel sheet.

[Embodiments of the Invention]

Hereinafter, embodiments of the invention will be described with reference to the drawings. In the specification and the drawings, the same components are designated by the same reference numerals.

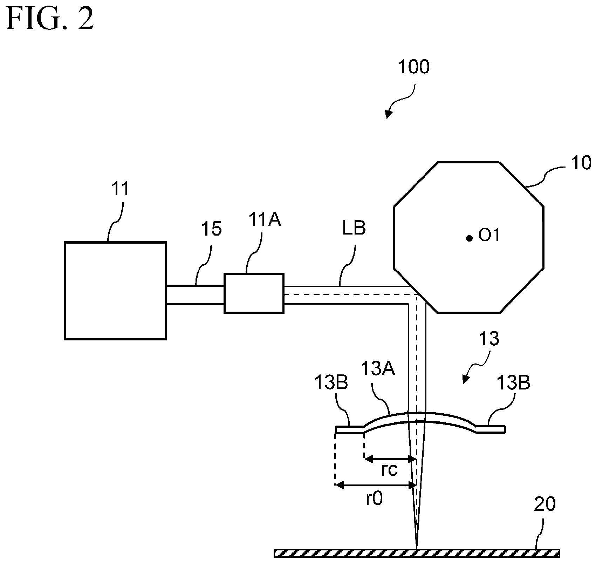

FIG. 2 schematically shows a configuration of a groove processing device 100 according to the embodiment of the invention as viewed from a rolling direction of a steel sheet 20. The groove processing device 100 is a device that periodically form a groove in a surface of the steel sheet 20, which is an object to be processed, using a laser. The steel sheet 20 is made of, for example, a well-known grain-oriented electrical steel sheet material. In the groove processing device 100, for example, the position of the steel sheet 20 in a width direction is set on the basis of the length and position of the groove formed in the surface of the steel sheet 20, and the position of the steel sheet 20 in a longitudinal direction is set on the basis of the dimensions of the groove processing device 100. The width direction of the steel sheet 20 is a scanning direction and is a left-right direction of the plane of paper in FIG. 2. The longitudinal direction of the steel sheet 20 is, for example, the rolling direction of the steel sheet 20 and is a depth direction of the plane of paper in FIG. 2.

As shown in FIG. 2, the groove processing device 100 includes a polygon mirror 10, a light source device 11, a collimator 11A, and a lens 13.

The polygon mirror 10 has, for example, a regular polygonal prism shape, and a plurality of (N) plane mirrors are provided on each of a plurality of side surfaces constituting a regular polygonal prism. A laser beam LB is incident on the polygon mirror 10 from the light source device 11 through the collimator 11A in one direction (horizontal direction) and is then reflected by the plane mirror (reflection step).

The polygon mirror 10 can be rotated on a rotation axis O1 by the driving of a motor (not shown), and the incident angle of the laser beam LB on the plane mirror changes sequentially depending on the rotation angle of the polygon mirror 10. Therefore, the reflection direction of the laser beam LB is sequentially changed to scan the steel sheet 20 with the laser beam LB in the width direction.

In addition, FIGS. 1A to 1B, 2, 3, 5A to 5E, 7, and 8 show an example in which the polygon mirror 10 has eight plane mirrors. However, the number of plane mirrors constituting the polygon mirror 10 is not particularly limited.

The light source device 11 outputs a laser beam using a predetermined irradiation method (for example, a continuous irradiation method or a pulse irradiation method) under the control of a control unit (not shown) (output step).

The collimator 11A is connected to the light source device 11 through an optical fiber cable 15. The collimator 11A adjusts the radius of the laser beam output from the light source device 11 and outputs the adjusted laser beam LB. The laser beam LB has a laser diameter having a predetermined radius $\varphi$, and the laser diameter is that of a circle. However, the laser diameter may be that of an ellipse. In this case, an elliptical condensing shape can be formed by inserting a cylindrical lens or a cylindrical mirror between the collimator 11A and the polygon mirror 10 to change the radius of the beam along one axis (for example, a scanning direction).

The lens 13 is an optical system that is provided on an optical path of the laser beam reflected from the polygon mirror 10 and is manufactured by performing processing, such as grinding and polishing, on a piece of glass. The lens 13 has a condensing portion 13A and a non-condensing portion 13B that is integrally provided outside (in the outer circumference of) the condensing portion 13A. In addition, in the following description, a case in which the lens 13 is composed of a single lens is described as an exemplary example. However, the lens 13 may be composed of a plurality of sets of lenses. A mirror may be adopted instead of the lens 13.

The condensing portion 13A is located on the optical path of the laser beam LB reflected from one plane mirror of the polygon mirror 10. The condensing portion 13A constitutes a condensing optical system that has a radius rc and a focal length f. The laser beam LB reflected from the polygon mirror 10 passes through the condensing portion 13A and is focused on the surface of the steel sheet 20 (condensing portion passage step). In this way, a groove is formed in the surface of the steel sheet 20.

The non-condensing portion 13B is located on the optical paths of laser beams LB1 and LB2 that have been divided and reflected from a corner portion in which two adjacent plane mirrors of the polygon mirror 10 meet and transmits the divided laser beams LB 1 and LB2 (non-condensing portion passage step). The non-condensing portion 13B is a planar optical system of a donut-shaped flat sheet in which an inner circle has a radius rc (= the radius of the condensing portion 13A) and an outer circle has a radius r0. The non-condensing portion 13B does not have a focus because the focal length thereof is infinite. Therefore, the surface of the steel sheet 20 is irradiated with the laser beams LB 1 and LB2 that have passed through the non-condensing portion 13B. However, since the laser beams LB 1 and LB2 are not focused, they do not have a high energy density, and no grooves are formed in the surface of the steel sheet 20. Further, even in a case in which the surface of the steel sheet 20 is not irradiated with the laser beams LB 1 and LB2, the devices and the like around the steel sheet 20 are not erroneously processed by the laser beams LB 1 and LB2 which deviate from the steel sheet 20.

Further, in a groove processing method which irradiates the surface of the steel sheet 20 with the laser beam LB to form a groove, base steel sheet is melted and removed to form a groove. Therefore, as the groove becomes deeper, the probability that a molten protrusion will occur on the surface becomes higher. Therefore, the groove processing device 100 may be configured to include a supply nozzle (not shown) for injecting an assist gas for blowing off a molten material.

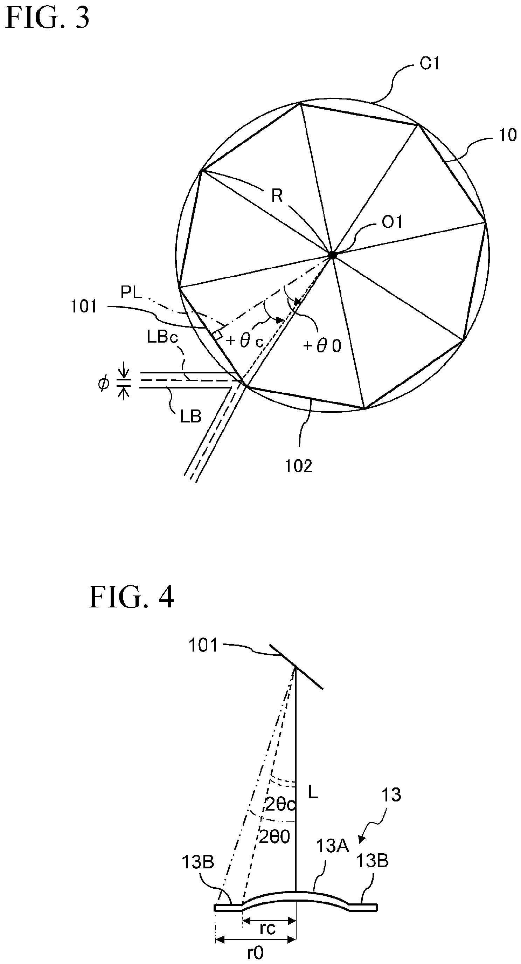

Next, the rotation angle of the polygon mirror 10 will be described with reference to FIG. 3.

In this embodiment, it is assumed that the rotation angle θ(°) of the polygon mirror 10 is defined by a central angle with respect to a reference position for each of the plane mirrors constituting the polygon mirror 10. As shown in FIG. 3, it is assumed that a position where a perpendicular line PL is drawn from a rotation axis O1 of the polygon mirror 10 to a plane mirror 101 is the reference position (θ = 0°). The rotation angle θ of the polygon mirror 10 is an angle (central angle) formed between the position of a center LBc of the laser beam LB incident on each plane mirror and the reference position (θ = 0°). In FIG. 3, a counterclockwise angle from the reference position (θ = 0°; the perpendicular line PL) is defined as a positive angle, and a clockwise angle from the reference position is defined as a negative angle.

An angle θ0 formed between the reference position (θ = 0°) in each plane mirror and a boundary with an adjacent plane mirror is 180°/N. The rotation angle θ of one plane mirror is defined in the range of -θ0 ≦ θ ≦ +θ0. Therefore, in FIG. 3, the rotation angle θ = +θ0 of the plane mirror 101 and the rotation angle θ = -θ0 of a plane mirror 102 adjacent to the plane mirror 101 in the counterclockwise direction indicate the same position on the polygon mirror 10.

In this embodiment, a maximum angle at which the incident laser beam LB falls within one surface (one plane mirror) of the polygon mirror 10 is defined as a critical angle θc. That is, when the laser beam LB is totally reflected by one plane mirror without being divided by a corner portion in which two adjacent plane mirrors of the polygon mirror 10 meet, the critical angle θc is the maximum angle at which the center LBc of the laser beam LB is located. Assuming that the radius (circumscribed radius) of a circumscribed circle C1 of the polygon mirror 10 is R and the radius of the laser beam LB incident on the polygon mirror 10 is φ, the critical angle θc is defined by Expression (1).

$$\theta c = \sin^{-1}[(R \times \sin\theta 0 \text{-}\varphi)/R] \cdots (1)$$

The size of the lens 13 can be defined by the rotation angle θ of the polygon mirror 10. As shown in FIG. 4, assuming that the distance between the reference position (θ = 0°) on the plane mirror 101 and the condensing portion 13A is L, the radius rc of the condensing portion 13A is represented by Expression (2), and the radius of the outer circle of the non-condensing portion 13B r0 is represented by Expression (3).

$$rc = L \times \tan 2\theta c + \varphi/\cos 2\theta c \cdots (2)$$

$$r0 = L \times \tan 2\theta 0 + \varphi/\cos 2\theta 0 \cdots (3)$$

For example, it is assumed that the groove processing device 100 is designed with the following specifications:

the radius φ of the laser beam LB: 6 mm;
the number of plane mirrors N constituting the polygon mirror 10: 8; and
a circumscribed radius R: 140 mm.

Therefore, θ0 = 22.5° and the critical angle θc = 19.9° are established.

When the distance L is 50 mm, rc = 49.4 mm and r0 = 58.5 mm are established by Expressions (2) and (3).

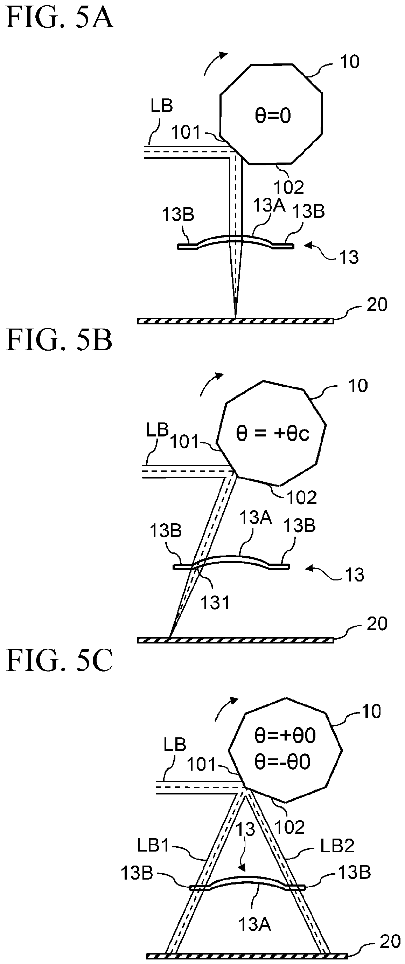

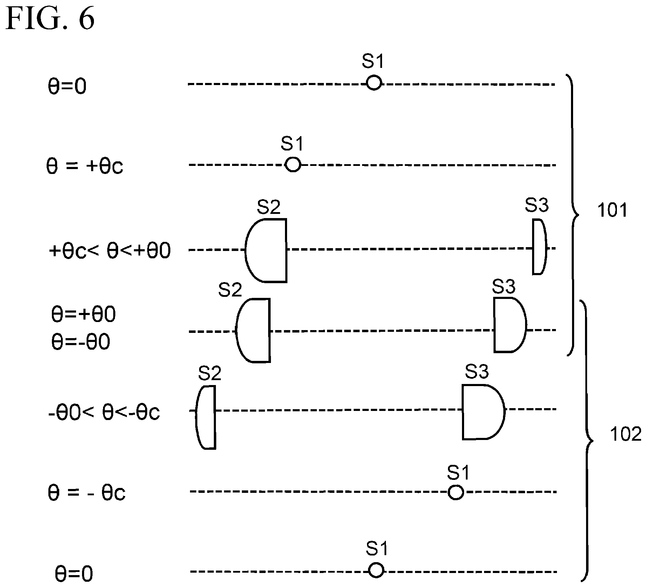

Next, a relationship between the rotation angle of the polygon mirror 10 and the irradiation state of the laser beam LB will be described with reference to FIGS. 5A to 5E and FIG. 6.

FIGS. 5A to 5E show the irradiation state of the laser beam LB when the polygon mirror 10 is rotated clockwise from the rotation angle θ = 0° of the plane mirror 101 to the rotation angle θ = 0° of the adjacent plane mirror 102.

When the plane mirror 101 is at the position where the rotation angle θ is in the range of -θc ≦ θ ≦ +θc, the laser beam LB incident on the plane mirror 101 is reflected in a downward direction (a direction toward the surface of the steel sheet 20) from the plane mirror 101, passes through the condensing portion 13A, and is focused on the surface of the steel sheet 20. In particular, when the plane mirror 101 is at the position where the rotation angle θ is 0°, as shown in FIG. 5A, the laser beam LB incident on the plane mirror 101 is reflected in the vertical direction (a direction perpendicular to the surface of the steel sheet 20) from the plane mirror 101, passes through the center of the condensing portion 13A, and is focused on the surface of the steel sheet 20. Therefore, when the plane mirror 101 is at the position where the rotation angle θ is in the range of -θc ≦ θ ≦ +θc, the position where the laser beam LB is reflected changes with the rotation of the polygon mirror 10 while a state in which the laser beam LB is focused on the surface of the steel sheet 20 is maintained. Therefore, a groove is formed in the surface of the steel sheet 20 in the width direction (scanning direction).

When the plane mirror 101 reaches the position where the rotation angle θ is +θc, as shown in FIG. 5B, the laser beam LB reflected from the plane mirror 101 passes through a first end portion 131 of the condensing portion 13A and is focused on the surface of the steel sheet 20.

As shown in FIG. 5C, when the plane mirror 101 exceeds the position where the rotation angle θ is +θ0 and when the plane mirror 102 is in front of the position where the rotation angle θ is -θ0 (that is, when the laser beam LB is incident on a corner portion in which the two adjacent plane mirrors 101 and 102 meet), the incident laser beam LB is reflected by each of the two plane mirrors 101 and 102 and is divided into two laser beams LB1 and LB2. The two laser beams LB1 and LB2 pass through the non-condensing portion 13B, and the surface of the steel sheet 20 or the devices and the like around the steel sheet 20 are irradiated with the laser beams LB1 and LB2.

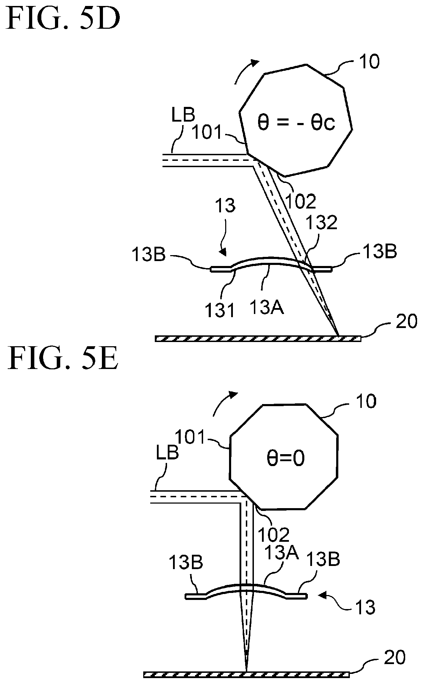

When the plane mirror 102 reaches the position where the rotation angle θ is - θc, as shown in FIG. 5D, the laser beam LB reflected from the plane mirror 102 passes through a second end portion 132 opposite to the first end portion 131 of the condensing portion 13A and is focused on the surface of the steel sheet 20.

When the plane mirror 102 is at the position where the rotation angle is in the range of -θc ≦ θ ≦ +θc, the laser beam LB incident on the plane mirror 102 is reflected in the downward direction (the direction toward the surface of the steel sheet 20) from the plane mirror 102, passes through the condensing portion 13A, and is focused on the surface of the steel sheet 20. In particular, when the plane mirror 102 reaches the position where the rotation angle θ is 0°, as shown in FIG. 5E, the laser beam LB incident on the plane mirror 102 is reflected in the vertical direction from the plane mirror 102, passes through the center of the condensing portion 13A, and is focused on the surface of the steel sheet 20.

In a case in which attention is focused on one plane mirror 101, when the range of the rotation angle θ is -θc ≦ θ ≦ +θc, the laser beam LB reflected from the plane mirror 101 passes through the condensing portion 13A and is focused on the surface of the steel sheet 20. On the other hand, when the range of the rotation angle θ is -θ0 ≦ θ <-θc or +θc < θ ≦ +θ0, the laser beams LB1 and LB2 reflected from the corner portion in which the plane mirror 101 and an adjacent plane mirror meet pass through the non-condensing portion 13B, and the surface of the steel sheet 20 is irradiated with the laser beams LB1 and LB2. However, the laser beams LB1 and LB2 are not focused and do not have a high energy density.

FIG. 6 shows a change in the spot of the laser beam on the surface of the steel sheet 20 when the polygon mirror 10 is rotated clockwise from the position where the rotation angle θ of the plane mirror 101 is 0° to the position where the rotation angle θ of the adjacent plane mirror 102 is 0° (see FIGS. 5A to 5E). In FIG. 6, a dotted line indicates the scanning direction of the laser beam.

As shown in FIG. 6, when the range of the rotation angle θ of the plane mirror 101 is 0 ≦ θ ≦ +θc (see FIGS. 5A and 5B), the laser beam LB reflected from the plane mirror 101 is focused on a minute circular spot S1 on the surface of the steel sheet 20. As the rotation angle θ increases, the spot S1 is moved in one direction (to the left in FIG. 6).

When the range of the rotation angle θ of the plane mirror 101 is +θc < θ ≦ +θ0 and when the range of the rotation angle θ of the plane mirror 102 is -θ0 ≦ θ <-θc, the laser beam LB is divided into two laser beams LB1 and LB2 as described above. The surface of the steel sheet 20 is irradiated with the two laser beams LB1 and LB2 through the non-condensing portion 13B, and two spots S2 and S3 corresponding to the two laser beams LB1 and LB2 are formed. Since the laser beams LB1 and LB2 are not focused on the surface of the steel sheet 20, each of the spots S2 and S3 has a larger area than the spot S1.

When the range of the rotation angle θ of the plane mirror 101 is +θc < θ < +θ0, the amount of the laser beam LB1 reflected from the plane mirror 101 is larger than the amount of the laser beam LB2 reflected from the plane mirror 102.

Therefore, the spot S2 has a larger area than the spot S3.

When the plane mirror 101 is at the position where the rotation angle θ is +θ0 and when the plane mirror 102 is at the position where the rotation angle θ is -θ0 (see FIG. 5C), the amount of the laser beam LB1 and the amount of the laser beam LB2 are equal to each other. Therefore, the area of the spot S2 is equal to the area of the spot S3.

When the range of the rotation angle θ of the plane mirror 102 is -θ0 < θ < -θc, the amount of the laser beam LB2 reflected from the plane mirror 102 is larger than the amount of the laser beam LB1 reflected from the plane mirror 101. Therefore, the spot S3 has a larger area than the spot S2.

When the range of the rotation angle θ of the plane mirror 102 is -θc ≦ θ ≦ 0 (see FIGS. 5D and 5E), the laser beam LB reflected from the plane mirror 102 is focused on the minute circular spot S 1 on the surface of the steel sheet 20. As the rotation angle θ approaches 0°, the spot S 1 is moved in one direction (to the left in FIG. 6).

As described above, according to this embodiment, when the laser beam LB is divided and reflected from the corner portion in which two adjacent surfaces of the polygon mirror 10 meet, the divided laser beams LB 1 and LB2 pass through the non-condensing portion 13B and are not focused on the surface of the steel sheet 20 such that energy density is not high. Therefore, no grooves are formed in the surface of the steel sheet 20. As a result, unlike the related art, an end portion of the groove in the scanning direction is not shallow, and it is possible to achieve uniform groove processing and groove depth and to produce a product having excellent iron loss characteristics. In addition, the devices and the like around the steel sheet 20 are not erroneously processed.

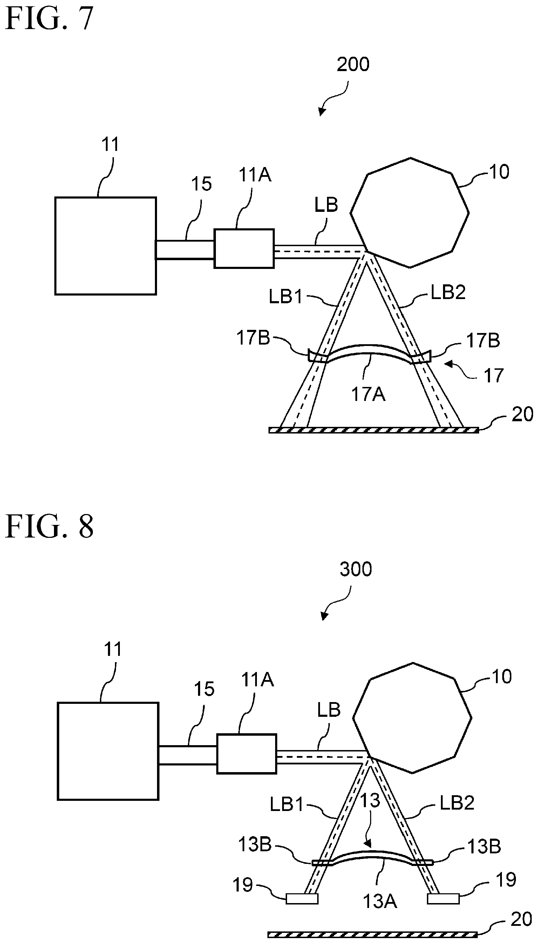

In the above-described embodiment shown in FIGS. 2 to 6, the non-condensing portion 13B of the lens 13 is a planar optical system having no focus. However, an optical system (FIG. 7) that diverges the divided laser beams LB 1 and LB2 may be adopted.

FIG. 7 shows a configuration of a groove processing device 200 according to Modification Example 1 of this embodiment as viewed from the rolling direction of the steel sheet 20. The groove processing device 200 includes a lens 17 instead of the lens 13 of the groove processing device 100 shown in FIG. 2 and FIGS. 5A to 5E.

The lens 17 is an optical system that is provided on the optical path of the laser beam reflected from the polygon mirror 10 and is manufactured by performing processing, such as grinding and polishing, on a piece of glass. The lens 17 has a condensing portion 17A and a non-condensing portion 17B that is integrally provided outside (in the outer circumference of) the condensing portion 17A.

Similar to the condensing portion 13A of the lens 13, the condensing portion 17A is located on the optical path of the laser beam LB reflected from one plane mirror of the polygon mirror 10 and constitutes a condensing optical system having a focal length f.

The non-condensing portion 17B is located on the optical path of the laser beams LB 1 and LB2 that have been divided and reflected from a corner portion of the polygon mirror 10 and transmits the divided laser beams LB 1 and LB2. The non-condensing portion 17B is thick toward a peripheral portion. In the non-condensing portion 17B, a surface facing the polygon mirror 10 is a spherical surface which is concave toward the polygon mirror 10, and a surface facing the steel sheet 20 is a flat surface. In addition, the surface of the non-condensing portion 17B which faces the steel sheet 20 may be a spherical surface which is concave toward the steel sheet 20. A boundary portion between the condensing portion 17A and the non-condensing portion 17B may have a slightly flat part. The laser beams LB1 and LB2 reflected from the corner portion of the polygon mirror 10 are diverged through the non-condensing portion 17B, and the surface of the steel sheet 20 is irradiated with the laser beams LB1 and LB2.

With this configuration, spots formed on the surface of the steel sheet 20 by the laser beams LB1 and LB2 passing through the non-condensing portion 17B have a larger area than the spots S2 and S3 shown in FIG. 6. Therefore, the irradiation intensity of the laser beams LB1 and LB2 to the surface of the steel sheet 20 is lower, and a groove is less likely to be formed in the surface of the steel sheet 20 as compared to the embodiment shown in FIGS. 2 to 6. As a result, it is possible to achieve more uniform groove processing and groove depth.

Further, FIG. 8 shows a configuration of a groove processing device 300 according to Modification Example 2 of this embodiment as viewed from the rolling direction of the steel sheet 20. As shown in FIG. 8, the groove processing device 300 includes a shielding plate 19, such as a mask, which is provided on the optical path of the laser beams LB 1 and LB2 that have passed through the non-condensing portion 13B (shielding step). Therefore, the laser beams LB1 and LB2 are blocked by the shielding plate 19. The laser beams LB1 and LB2 that have passed through the non-condensing portion 13B have a lower irradiation intensity than the laser beams LB1 and LB2 that have passed through the condensing lens 12 shown in FIG. 1B. As a result, even when the shielding plate 19 is irradiated with the laser beams LB1 and LB2 that have passed through the non-condensing portion 13B, the damage of the shielding plate 19 is small.

In addition, when a configuration in which the lens 17 shown in FIG. 7 and the shielding plate 19 shown in FIG. 8 are combined is adopted, it is possible to further suppress the damage of the shielding plate 19.

Further, the content described in this embodiment can be appropriately changed without departing from the scope of the invention as defined in the appended claims.

For example, a mirror may be used instead of the lens as the optical system constituting the groove processing device.

[Industrial Applicability]

According to the invention, it is possible to provide a groove processing device and a groove processing method that can achieve uniform groove processing and groove depth without contaminating optical components. Therefore, the invention has extremely high industrial applicability.

[Brief Description of the Reference Symbols]

10 Polygon mirror
11 Light source device
11A Collimator
13, 17 Lens
13A, 17A Condensing portion
13B, 17B Non-condensing portion
15 Optical fiber cable
19 Shielding plate
20 Steel sheet
100, 200, 300 Groove processing device
101, 102 Plane mirror
C1 Circumscribed circle
LB Laser beam
O1 Rotation axis
PL Perpendicular line

**Claims**

1. A groove processing device (100, 200, 300) that forms a groove in a surface of an object using a laser beam (LB), the groove processing device (100, 200, 300) comprising:

   a light source device (11) that outputs the laser beam (LB),
   a polygon mirror (10) that reflects the laser beam (LB) output from the light source device (11); and
   an optical system that is provided on an optical path of the laser beam (LB) reflected from the polygon mirror (10) and includes a condensing portion (13A, 17A) which transmits the laser beam (LB) reflected from one surface of the polygon mirror (10) so as to be focused on the surface of the object and **characterized by** a non-condensing portion (13B, 17B) which is provided outside the condensing portion (13A, 17A) and transmits the laser beam (LB) reflected from a corner portion, in which two adjacent surfaces of the polygon mirror (10) meet, so as not to be focused on the surface of the object.

2. The groove processing device according to claim 1,

   wherein the non-condensing portion (13B, 17B) does not have a focus.

3. The groove processing device according to claim 1, wherein the non-condensing portion (13B, 17B) diverges the laser beam (LB) reflected from the corner portion of the polygon mirror (10).

4. The groove processing device according to any one of claims 1 to 3, further comprising:

a shielding plate (19) that is provided on the optical path of the laser beam (LB) transmitted through the non-condensing portion (13B, 17B).

5. A groove processing method that forms a groove in a surface of an object using a laser beam (LB), the groove processing method comprising:

   an output step of outputting the laser beam from a light source device (11);
   a reflection step of reflecting the laser beam (LB) output from the light source device (11) by a polygon mirror (10);
   a condensing portion passage step of causing the laser beam (LB) reflected from one surface of the polygon mirror (10) to pass through a condensing portion (13A, 17A) so as to be focused on the surface of the object; and **characterized by**
   a non-condensing portion passage step of causing the laser beam (LB) reflected from a corner portion, in which two adjacent surfaces of the polygon mirror (10) meet, to pass through a non-condensing portion (13B, 17B) that is provided outside the condensing portion (13A, 17A) so as not to be focused on the surface of the object.

6. The groove processing method according to claim 5, wherein the non-condensing portion (13B, 17B) does not have a focus in the non-condensing portion passage step.

7. The groove processing method according to claim 5, wherein the non-condensing portion (13B, 17B) diverges the laser beam (LB) in the non-condensing portion passage step.

8. The groove processing method according to any one of claims 5 to 7, further comprising:
a shielding step of blocking the laser beam (LB) that has passed through the non-condensing portion : (13B, 17B) in the non-condensing portion passage step using a shielding plate (19) that is provided on the optical path of the laser beam (LB).

**Patentansprüche**

1. Rillenbearbeitungsvorrichtung (100, 200, 300), die in einer Oberfläche eines Objekts mithilfe eines Laserstrahls (LB) eine Rille bildet, wobei die Rillenbearbeitungsvorrichtung (100, 200, 300) aufweist:

   eine Lichtquellenvorrichtung (11), die den Laserstrahl (LB) ausgibt;
   einen Polygonspiegel (10), der den aus der Lichtquellenvorrichtung (11) ausgegebenen Laserstrahl (LB) reflektiert, und

ein optisches System, das auf einem optischen Pfad des von dem Polygonspiegel (10) reflektierten Laserstrahls (LB) vorgesehen ist und einen Kondensorabschnitt (13A, 17A) aufweist, der den von einer Oberfläche des Polygonspiegels (10) reflektierten Laserstrahls (LB) derart reflektiert, dass er auf der Oberfläche des Objekts fokussiert wird, und **gekennzeichnet durch** einen Nicht-Kondensorabschnitt (13B, 17B), der außerhalb des Kondensorabschnitts (13A, 17A) vorgesehen ist und den von einem Eckabschnitt, in dem zwei benachbarte Oberflächen des Polygonspiegels (10) aufeinandertreffen, reflektierten Laserstrahl (LB) transmittiert, so dass er nicht auf der Oberfläche des Objekts fokussiert wird.

2. Rillenbearbeitungsvorrichtung nach Anspruch 1, wobei der Nicht-Kondensorabschnitt (13B, 17B) keinen Brennpunkt aufweist.

3. Rillenbearbeitungsvorrichtung nach Anspruch 1, wobei der Nicht-Kondensorabschnitt (13B, 17B) den von dem Eckabschnitt des Polygonspiegels (10) reflektierten Laserstrahl (LB) divergiert.

4. Rillenbearbeitungsvorrichtung nach einem der Ansprüche 1 bis 3, ferner aufweisend: eine Abschirmplatte (19), die auf dem optischen Pfad des durch den Nicht-Kondensorabschnitt (13B, 17B) transmittierten Laserstrahls (LB) vorgesehen ist.

5. Rillenbearbeitungsverfahren, das in einer Oberfläche eines Objekts mithilfe eines Laserstrahls (LB) eine Rille bildet, wobei das Rillenbearbeitungsverfahren aufweist:

   einen Ausgabeschritt des Ausgebens des Laserstrahls aus einer Lichtquellenvorrichtung (11);
   einen Reflexionsschritt des Reflektierens des aus der Lichtquellenvorrichtung (11) ausgegebenen Laserstrahls (LB) durch einen Polygonspiegel (10);
   einen Kondensorabschnitt-Durchtrittschritt, in dem bewirkt wird, dass der von einer Oberfläche des Polygonspiegels (10) reflektierte Laserstrahl (LB) durch einen Kondensorabschnitt (13A, 17A) hindurchtritt, um auf die Oberfläche des Objekts fokussiert zu werden; und
   **gekennzeichnet durch**;
   einen Nicht-Kondensorabschnitt-Durchtrittschritt, in dem bewirkt wird, dass der Laserstrahl (LB), der von einem Eckabschnitt reflektiert wird, in dem zwei angrenzende Oberflächen des Polygonspiegels (10) aufeinandertreffen, durch einen Nicht-Kondensorabschnitt (13B, 17B) hindurchtritt, der außerhalb des Kondensorabschnitts (13A, 17A) vorgesehen ist, so dass er nicht auf die Oberfläche des Objekts fokussiert wird.

6. Rillenbearbeitungsverfahren nach Anspruch 5, wobei der Nicht-Kondensorabschnitt (13B, 17B) in dem Nicht-Kondensorabschnitt-Durchtrittschritt keinen Fokus aufweist.

7. Rillenbearbeitungsverfahren nach Anspruch 5, wobei der Nicht-Kondensorabschnitt (13B, 17B) den Laserstrahl (LB) in dem Nicht-Kondensorabschnitt-Durchtrittschritt divergiert.

8. Rillenbearbeitungsverfahren nach einem der Ansprüche 5 bis 7, ferner aufweisend: einen Abschirmschritt des Blockierens des Laserstrahls (LB), der durch den Nicht-Kondensorabschnitt (13B, 17B) hindurchgetreten ist, in dem Nicht-Kondensorabschnitt-Durchtrittsschritt vermittels einer Abschirmplatte (19), die auf dem optischen Pfad des Laserstrahls (LB) vorgesehen ist.

**Revendications**

1. Dispositif d'usinage de rainure (100, 200, 300) qui forme une rainure dans une surface d'un objet au moyen d'un faisceau laser (LB), le dispositif d'usinage de rainure (100, 200, 300) comprenant :

   un dispositif de source de lumière (11) qui émet en sortie le faisceau laser (LB) ;
   un miroir polygonal (10) qui réfléchit le faisceau laser (LB) émis en sortie à partir du dispositif de source de lumière (11) ; et
   un système optique qui est disposé sur un trajet optique du faisceau laser (LB) réfléchi à partir du miroir polygonal (10) et inclut une partie de concentration (13A, 17A) qui transmet le faisceau laser (LB) réfléchi à partir d'une surface du miroir polygonal (10) pour sa convergence sur la surface de l'objet et **caractérisé par** une partie de non-concentration (13B, 17B) qui est disposée à l'extérieur de la partie de concentration (13A, 17A) et transmet le faisceau laser (LB) réfléchi à partir d'une partie d'angle, dans laquelle deux surfaces adjacentes du miroir polygonal (10) se rencontrent, de manière à ne pas être convergé sur la surface de l'objet.

2. Dispositif d'usinage de rainure selon la revendication 1, dans lequel la partie de non-concentration (13B, 17B) ne présente pas de point de convergence.

3. Dispositif d'usinage de rainure selon la revendication 1, dans lequel la partie de non-concentration (13B, 17B) diverge le faisceau laser (LB) réfléchi à partir de la partie d'angle du miroir polygonal (10).

4. Dispositif d'usinage de rainure selon l'une quelconque des revendications 1 à 3, comprenant en outre : une plaque de protection (19) qui est disposée sur le trajet optique du faisceau laser (LB) transmis par le biais de la partie de non-concentration (13B, 17B).

5. Procédé d'usinage de rainure qui forme une rainure dans une surface d'un objet au moyen d'un faisceau laser (LB), le procédé d'usinage de rainure comprenant :

   une étape d'émission en sortie consistant à émettre en sortie le faisceau laser à partir d'un dispositif de source de lumière (11) ;
   une étape de réflexion consistant à réfléchir le faisceau laser (LB) émis en sortie à partir du dispositif de source de lumière (11) par un miroir polygonal (10) ;
   une étape de passage de partie de concentration consistant à amener le faisceau laser (LB) réfléchi à partir de ladite surface du miroir polygonal (10) à traverser une partie de concentration (13A, 17A) de manière à être convergé sur la surface de l'objet ; et **caractérisé par**
   une étape de passage de partie de non-concentration consistant à amener le faisceau laser (LB) réfléchi à partir d'une partie d'angle, dans laquelle deux surfaces adjacentes du miroir polygonal (10) se rencontrent, à traverser une partie de non-concentration (13B, 17B) qui est disposée à l'extérieur de la partie de concentration (13A, 17A) de manière à ne pas être convergé sur la surface de l'objet.

6. Procédé d'usinage de rainure selon la revendication 5, dans lequel la partie de non-concentration (13B, 17B) ne présente pas de point de convergence dans l'étape de passage de partie de non-concentration.

7. Procédé d'usinage de rainure selon la revendication 5, dans lequel la partie de non-concentration (13B, 17B) diverge le faisceau laser (LB) dans l'étape de passage de partie de non-concentration.

8. Procédé d'usinage de rainure selon l'une quelconque des revendications 5 à 7, comprenant en outre : une étape de protection consistant à bloquer le faisceau laser (LB) qui a traversé la partie de non-concentration (13B, 17B) dans l'étape de passage de partie de non-concentration au moyen d'une plaque de protection (19) qui est disposée sur le trajet optique du faisceau laser (LB).

FIG. 1A

FIG. 1B

FIG. 2

## FIG. 3

## FIG. 4

## FIG. 5A

θ=0

## FIG. 5B

θ = +θc

## FIG. 5C

θ=+θ0
θ=-θ0

## FIG. 5D

## FIG. 5E

FIG. 6

$\theta=0$

S1

$\theta = +\theta c$

S1

$+\theta c< \theta<+\theta 0$

S2   S3

$\theta=+\theta 0$
$\theta=-\theta 0$

S2   S3

$-\theta 0< \theta<-\theta c$

S2   S3

$\theta = - \theta c$

S1

$\theta=0$

S1

101

102

FIG. 7

FIG. 8

**EP 3 970 904 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019091044 A
- DE 102016107593 A1
- JP 2002292484 A